# EUROPEAN PATENT APPLICATION

(11) **EP 4 564 282 A1**
(43) Date of publication of application: **04.06.2025**
(21) Application number: 24216507.4
(22) Date of filing: 29.11.2024
(51) Int. Cl.: G06T 3/4015

(54) **METHOD AND DEVICE WITH IMAGE SENSOR SIGNAL PROCESSING**

(30) Priority: 29.11.2023 KR 20230169917
(71) Applicant: Samsung Electronics Co., Ltd, Suwon-si, Gyeonggi-do 16677 (KR)
(72) Inventor: KIM, Pilsu, 16678 Suwon-si (KR); YOO, Jaehyoung, 16678 Suwon-si (KR); SEO, Geonseok, 16678 Suwon-si (KR); LEE, Hyong Euk, 16678 Suwon-si (KR); CHOI, Jae Seok, 16678 Suwon-si (KR)
(74) Representative: Arnold & Siedsma

(57) **Abstract**

A processor-implemented method includes obtaining a color filter array (CFA) input image, obtaining pattern information corresponding to a CFA, preprocessing the input image based on the pattern information, generating an inferred image by inputting the preprocessed input image to an artificial neural network (ANN) model, and generating an output image by selecting a pixel value, for each pixel, from one of the preprocessed input image and the inferred image, based on the pattern information.

## Description

### BACKGROUND

### 1. Field

The following description relates to a method and device with image sensor signal processing.

### 2. Description of Related Art

Ubiquitous computing may allow computer systems to be used anytime and anywhere. This computing may be implemented using portable electronic devices such as mobile phones, digital cameras, laptop computers, and the like.

In particular, image capturing devices may be equipped with image sensors such as cameras and camcorders. The image capturing devices may capture images and record them on a recording medium to play them at any time. However, such portable electronic devices and/or image capturing devices may not achieve a high-performance, may be large in size, may be heavy in weight, and/or may consume a great amount of power.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one or more general aspects, a processor-implemented method includes: obtaining a color filter array (CFA) input image, the CFA input image being an input signal sampled by a CFA; obtaining pattern information corresponding to the CFA; preprocessing the input image based on the pattern information; generating an inferred image by inputting the preprocessed input image to an artificial neural network (ANN) model, the inferred image comprising pixels inferred by the ANN model which correspond to the pixels of the preprocessed input image; and generating an output image by selecting a pixel value, for each pixel, from one of the preprocessed input image and the inferred image, based on the pattern information.

The generating of the output image may include: determining the pixel value for a pixel having the same color as that of a target pixel based on the preprocessed input image, the target pixel being a pixel that is a target of demosaicing; and determining the pixel value for a pixel having a different color from that of the target pixel based on the inferred image.

The preprocessing may include classifying the input image by color type of the CFA based on the pattern information.

The preprocessing may include extracting a feature corresponding to the input image for each color type of the CFA based on the pattern information.

The preprocessing further may include downsampling the feature.

The ANN model may be present for each color type of the CFA, and the generating of the inferred image may include generating the inferred image by inputting the preprocessed input image to an ANN model corresponding to each color type of the CFA.

The pattern information may include pixel location information of the CFA associated with pixel locations and/or color information based on the pixel locations.

The color information may include any one or any combination of any two or more of color channel information, gain information, and disparity information according to the pixel locations.

The method may include postprocessing the output image based on the pattern information.

The postprocessing may include performing either one or both of denoising or super-resolution on the output image, based on the pattern information.

The CFA input image may include any one or any combination of any two or more of a Bayer pattern image, a tetra pattern image, and a nona pattern image.

The generating of the inferred image may include generating a red, green, and blue (RGB) image corresponding to the preprocessed input image.

In one or more general aspects, a non-transitory computer-readable storage medium may store instructions that, when executed by one or more processors, configure the one or more processors to perform any one, any combination, or all of operations and/or methods disclosed herein.

In one or more general aspects, a processor-implemented method includes: obtaining a color filter array (CFA) input image; obtaining pattern information corresponding to a CFA; preprocessing the input image based on the pattern information; generating an inferred image based on the preprocessed input image; and generating an output image by postprocessing the inferred image based on the pattern information, wherein the pattern information may include either one or both of pixel location information of the CFA associated with pixel locations and color information based on the pixel locations.

The generating of the inferred image may include generating a super-resolution image corresponding to the input image by inputting the preprocessed input image to an artificial neural network (ANN) model.

The generating of the inferred image may include generating a remosaic image corresponding to the input image by inputting the preprocessed input image to an ANN model.

The generating of the inferred image may include generating a denoised image in which noise is at least partially removed from the input image by inputting the preprocessed input image to an ANN model.

In one or more general aspects, an electronic device includes: an image sensor combined with a color filter array (CFA), wherein the image sensor is configured to generate a CFA input image by sensing a light that has passed through a CFA, the CFA input image being an input signal sampled by the CFA; and one or more processors configured to: obtain pattern information corresponding to the CFA; preprocess the input image based on the pattern information; generate an inferred image by inputting the preprocessed input image to an artificial neural network (ANN) model, the inferred image comprising pixels inferred by the ANN model which correspond to the pixels of the preprocessed input image; and generate an output image by selecting a pixel value, for each pixel, from one of the preprocessed input image and the inferred image, based on the pattern information.

For the generating of the output image, the one or more processors may be configured to: determine the pixel value for a pixel having the same color as that of a target pixel based on the preprocessed input image, the target pixel being a pixel that is a target of demosaicing; and determine the pixel value for a pixel having a different color from that of the target pixel based on the inferred image.

For the preprocessing, the one or more processors may be configured to classify the input image by color type of the CFA based on the pattern information.

For the preprocessing, the one or more processors may be configured to extract a feature corresponding to the input image for each color type of the CFA, based on the pattern information.

For the preprocessing, the one or more processors may be configured to downsample the feature.

The ANN model may be present for each color type of the CFA, and for the generating of the inferred image, the one or more processors may be configured to generate the inferred image by inputting the preprocessed input image to an ANN model corresponding to each color type of the CFA.

The pattern information may include either one or both of pixel location information of the CFA associated with pixel locations and color information based on the pixel locations.

The color information may include any one or any combination of any two or more of color channel information, gain information, and disparity information, according to the pixel locations.

The one or more processors may be configured to postprocess the output image based on the pattern information.

For the postprocessing, the one or more processors may be configured to perform either one or both of denoising and super-resolution on the output image, based on the pattern information.

The CFA input image may include any one or any combination of any two or more of a Bayer pattern image, a tetra pattern image, and a nona pattern image.

For the generating of the inferred image, the one or more processors may be configured to generate a red, green, and blue (RGB) image corresponding to the preprocessed input image.

In one or more general aspects, an electronic device includes: one or more processors configured to: obtain a color filter array (CFA) input image; obtain pattern information corresponding to a CFA; preprocess the input image based on the pattern information; generate an inferred image based on the preprocessed input image; and generate an output image by postprocessing the inferred image based on the pattern information, wherein the pattern information may include either one or both of pixel location information of the CFA associated with pixel locations and color information based on the pixel locations.

Other features and aspects will be apparent from the following detailed description, the drawings, and the claims.

The present disclosure also concerns the following clauses:
Clause 1. A processor-implemented method, comprising:
   obtaining a color filter array (CFA) input image;
   obtaining pattern information corresponding to a CFA;
   preprocessing the input image based on the pattern information;
   generating an inferred image by inputting the preprocessed input image to an artificial neural network (ANN) model; and
   generating an output image by selecting, for each pixel, from either one of the preprocessed input image and the inferred image, based on the pattern information.
Clause 2. The method of clause 1, wherein the generating of the output image comprises:
   determining a pixel value for a pixel having the same color as that of a target pixel based on the preprocessed input image; and
   determining a pixel value for a pixel having a different color from that of the target pixel based on the inferred image.
Clause 3. The method of clause 1, wherein the preprocessing comprises classifying the input image by color type of the CFA based on the pattern information.
Clause 4. The method of clause 1, wherein the preprocessing further comprises extracting a feature corresponding to the input image for each color type of the CFA based on the pattern information.
Clause 5. The method of clause 4, wherein the preprocessing further comprises downsampling the feature.
Clause 6. The method of clause 1, wherein
   the ANN model is present for each color type of the CFA, and
   the generating of the inferred image comprises generating the inferred image by inputting the preprocessed input image to an ANN model corresponding to each color type of the CFA.
Clause 7. The method of clause 1, wherein the pattern information comprises either one or both of pixel location information of the CFA associated with pixel locations and color information based on the pixel locations.
Clause 8. The method of clause 7, wherein the color information comprises any one or any combination of any two or more of color channel information, gain information, and disparity information according to the pixel locations.
Clause 9. The method of clause 1, further comprising postprocessing the output image based on the pattern information.
Clause 10. The method of clause 9, wherein the postprocessing comprises performing either one or both of denoising or super-resolution on the output image, based on the pattern information.
Clause 11. The method of clause 1, wherein the CFA input image comprises any one or any combination of any two or more of a Bayer pattern image, a tetra pattern image, and a nona pattern image.
Clause 12. The method of clause 1, wherein the generating of the inferred image comprises generating a red, green, and blue (RGB) image corresponding to the preprocessed input image.
Clause 13. A non-transitory computer-readable storage medium storing instructions that, when executed by one or more processors, configure the one or more processors to perform the method of clause 1.
Clause 14. A processor-implemented method, comprising:
   obtaining a color filter array (CFA) input image;
   obtaining pattern information corresponding to a CFA;
   preprocessing the input image based on the pattern information;
   generating an inferred image based on the preprocessed input image; and
   generating an output image by postprocessing the inferred image based on the pattern information,
   wherein the pattern information comprises either one or both of pixel location information of the CFA associated with pixel locations and color information based on the pixel locations.
Clause 15. The method of clause 14, wherein the generating of the inferred image comprises generating a super-resolution image corresponding to the input image by inputting the preprocessed input image to an artificial neural network (ANN) model.
Clause 16. The method of clause 14, wherein the generating of the inferred image comprises generating a remosaic image corresponding to the input image by inputting the preprocessed input image to an ANN model.
Clause 17. The method of clause 14, wherein the generating of the inferred image comprises generating a denoised image in which noise is removed from the input image by inputting the preprocessed input image to an ANN model.
Clause 18. An electronic device, comprising:
   an image sensor combined with a color filter array (CFA), wherein the image sensor is configured to generate a CFA input image by sensing a light that has passed through the CFA; and
   one or more processors configured to:
      obtain pattern information corresponding to the CFA;
      preprocess the input image based on the pattern information;
      generate an inferred image by inputting the preprocessed input image to an artificial neural network (ANN) model; and
      generate an output image by selecting, for each pixel, from either one of the preprocessed input image and the inferred image, based on the pattern information.
Clause 19. The electronic device of clause 18, wherein, for the generating of the output image, the one or more processors are configured to:
   determine a pixel value for a pixel having the same color as that of a target pixel based on the preprocessed input image; and
   determine a pixel value for a pixel having a different color from that of the target pixel based on the inferred image.
Clause 20. The electronic device of clause 18, wherein, for the preprocessing, the one or more processors are configured to classify the input image by color type of the CFA based on the pattern information.
Clause 21. The electronic device of clause 18, wherein, for the preprocessing, the one or more processors are configured to extract a feature corresponding to the input image for each color type of the CFA, based on the pattern information.
Clause 22. The electronic device of clause 21, wherein, for the preprocessing, the one or more processors are configured to downsample the feature.
Clause 23. The electronic device of clause 18, wherein
   the ANN model is present for each color type of the CFA, and
   for the generating of the inferred image, the one or more processors are configured to generate the inferred image by inputting the preprocessed input image to an ANN model corresponding to each color type of the CFA.
Clause 24. The electronic device of clause 18, wherein the pattern information comprises either one or both of pixel location information of the CFA associated with pixel locations and color information based on the pixel locations.
Clause 25. The electronic device of clause 24, wherein the color information comprises any one or any combination of any two or more of color channel information, gain information, and disparity information, according to the pixel locations.
Clause 26. The electronic device of clause 18, wherein the one or more processors are configured to postprocess the output image based on the pattern information.
Clause 27. The electronic device of clause 26, wherein, for the postprocessing, the one or more processors are configured to perform either one or both of denoising and super-resolution on the output image, based on the pattern information.
Clause 28. The electronic device of clause 18, wherein the CFA input image comprises any one or any combination of any two or more of a Bayer pattern image, a tetra pattern image, and a nona pattern image.
Clause 29. The electronic device of clause 18, wherein, for the generating of the inferred image, the one or more processors are configured to generate a red, green, and blue (RGB) image corresponding to the preprocessed input image.
Clause 30. An electronic device, comprising:
   one or more processors configured to:
   obtain a color filter array (CFA) input image;
   obtain pattern information corresponding to a CFA;
   preprocess the input image based on the pattern information;
   generate an inferred image based on the preprocessed input image; and
   generate an output image by postprocessing the inferred image based on the pattern information, wherein the pattern information comprises either one or both of pixel location information of the CFA associated with pixel locations and color information based on the pixel locations.

### BRIEF DESCRIPTION OF THE DRAWINGS

FIG. 1 illustrates an example of an imaging system (or image capturing system) according to one or more example embodiments.
FIG. 2 illustrates an example of performing a demosaicing method.
FIGS. 3A and 3B illustrate a comparison between a demosaicing method according to one or more example embodiments and a typical demosaicing method.
FIGS. 4 to 6 illustrate a demosaicing method according to one or more example embodiments.
FIG. 7 illustrates a demosaicing method according to one or more example embodiments.
FIG. 8 illustrates a signal processing method according to one or more example embodiments.
FIG. 9 illustrates an example of a configuration of an electronic device according to one or more example embodiments.

Throughout the drawings and the detailed description, unless otherwise described or provided, the same or like drawing reference numerals will be understood to refer to the same or like elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences within and/or of operations described herein are merely examples, and are not limited to those set forth herein, but may be changed as will be apparent after an understanding of the disclosure of this application, except for sequences within and/or of operations necessarily occurring in a certain order. As another example, the sequences of and/or within operations may be performed in parallel, except for at least a portion of sequences of and/or within operations necessarily occurring in an order, e.g., a certain order. Also, descriptions of features that are known after an understanding of the disclosure of this application may be omitted for increased clarity and conciseness.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Throughout the specification, when a component or element is described as "on," "connected to," "coupled to," or "joined to" another component, element, or layer, it may be directly (e.g., in contact with the other component, element, or layer) "on," "connected to," "coupled to," or "joined to" the other component element, or layer, or there may reasonably be one or more other components elements, or layers intervening therebetween. When a component or element is described as "directly on", "directly connected to," "directly coupled to," or "directly joined to" another component element, or layer, there can be no other components, elements, or layers intervening therebetween. Likewise, expressions, for example, "between" and "immediately between" and "adjacent to" and "immediately adjacent to" may also be construed as described in the foregoing.

The terminology used herein is for describing various examples only and is not to be used to limit the disclosure. The articles "a," "an," and "the" are intended to include the plural forms as well, unless the context clearly indicates otherwise. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof, or the alternate presence of an alternative stated features, numbers, operations, members, elements, and/or combinations thereof. Additionally, while one embodiment may set forth such terms "comprise" or "comprises," "include" or "includes," and "have" or "has" specify the presence of stated features, numbers, operations, members, elements, and/or combinations thereof, other embodiments may exist where one or more of the stated features, numbers, operations, members, elements, and/or combinations thereof are not present.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

As used herein, the term "and/or" includes any one and any combination of any two or more of the associated listed items. The phrases "at least one of A, B, and C", "at least one of A, B, or C", and the like are intended to have disjunctive meanings, and these phrases "at least one of A, B, and C", "at least one of A, B, or C", and the like also include examples where there may be one or more of each of A, B, and/or C (e.g., any combination of one or more of each of A, B, and C), unless the corresponding description and embodiment necessitates such listings (e.g., "at least one of A, B, and C") to be interpreted to have a conjunctive meaning.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application. The use of the terms "example" or "embodiment" herein have a same meaning (e.g., the phrasing "in one example" has a same meaning as "in one embodiment", and "one or more examples" has a same meaning as "in one or more embodiments").

The example embodiments described herein may be implemented in various types of products, such as, for example, personal computers (PCs), laptop computers, tablet computers, smartphones, televisions (TVs), smart home appliances, intelligent vehicles, kiosks, and wearable devices. Hereinafter, the example embodiments will be described in detail with reference to the accompanying drawings. When describing the example embodiments with reference to the accompanying drawings, like reference numerals refer to like components and a repeated description related thereto will be omitted.

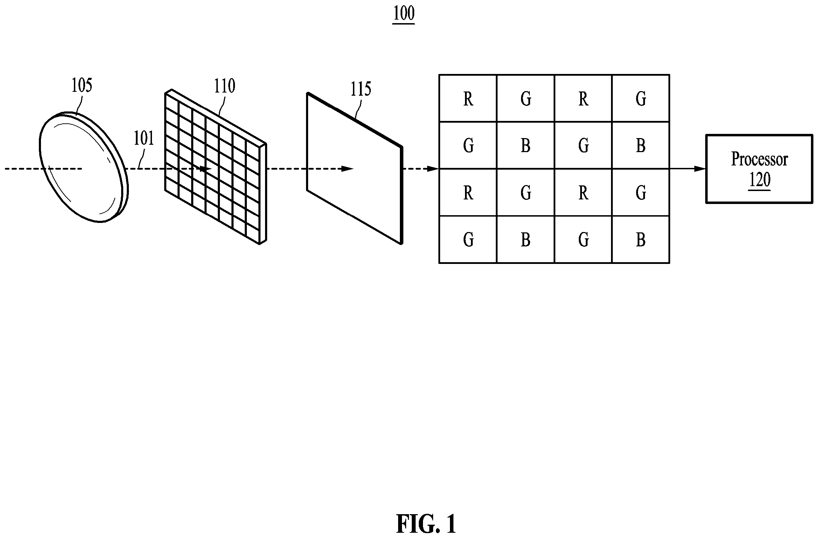

FIG. 1 illustrates an example of an imaging system (also referred to herein as an image capturing system) according to one or more example embodiments.

Referring to FIG. 1, according to one or more example embodiments, an imaging system 100 may include a portion of a mobile device such as a smartphone, a tablet personal computer (PC), a camera, or other devices. The imaging system 100 may include a lens 105, a color filter array (CFA) 110, an image sensor 115, and a processor 120 (e.g., one or more processors). However, not all the illustrated components are essential. The imaging system 100 may be implemented with more components than the illustrated components or may be implemented with fewer components than the illustrated components. For example, the imaging system 100 may further include a controller, a memory, and a display.

One or more of the components of the imaging system 100 (e.g., one or more of the CFA 110, the image sensor 115, and the processor 120) may be instantiated as an element of a single integrated system, such as, a system-on-a-chip (SOC) or other integrated systems. Additionally, according to various example embodiments, the CFA 110 and the image sensor 115 may be integrated, as shown in a case in which pixels of the CFA 110 are formed or arranged on the surface of the image sensor 115.

A light 101 may pass through the lens 105 and the CFA 110 and may then be sensed by the image sensor 115, and the image sensor 115 may generate a CFA input image using the received light. The CFA input image is an input signal sampled by a CFA. The lens 105 may include any suitable lens including, as non-limiting examples, a rectilinear lens, a wide-field (or fisheye) lens, a fixed focal length lens, a zoom lens, a fixed aperture lens, a variable aperture lens, and/or the like. The image sensor 115 may include a complementary metal-oxide semiconductor (CMOS) image sensor, a charge-coupled device (CCD) image sensor, and/or other suitable image sensors.

The image sensor 115 may convert a light into an electrical signal using a light receiving element. In an example, to obtain color information in addition to the intensity of light, the image sensor 115 may receive light by specifying the intensity of a visible ray of a specific wavelength through the CFA 110 and verify the intensity of the light of the wavelength at a corresponding location, enabling color conversion for people to perceive colors.

The processor 120 may be an image signal processor (ISP). The processor 120 may perform demosaicing (or "demosaic") to generate missing pixels of each color channel to generate a red, green, and blue (RGB) image from an input signal sampled by the CFA 110. Typical demosaicing may be performed through interpolation using sampled data based on signal processing. However, in the case of a high-frequency image area with a high-frequency characteristic, the interpolation performed using neighboring pixels may induce an artifact such as moire due to aliasing.

A machine learning technology such as deep learning may be applied to image processing and demosaicing, and the machine learning technology may have more desirable performance compared to such a typical ISP method. The machine learning-based demosaicing may perform image processing using a convolution filter set structure such as U-NET and residual dense block (RDN). In an example, typical technologies may be used to generate all pixels through the same filter set structure. In this example, the location information of a CFA may not be considered, and thus the configuration of neighboring pixels may change depending on pixel locations in the CFA: the composition of neighboring pixels varies depending on the pixel locations in Bayer (or tetra-, nona-). In particular, the distribution of neighboring pixels is significantly different for green (G) pixels and red (R) / blue (B) pixels. According to one or more example embodiments, a target pixel may refer to a pixel that is a target of demosaicing.

As will be described in detail below, in contrast to the typical technologies discussed above, the processor 120 of one or more example embodiments may perform demosaicing using pattern information corresponding to the CFA 110.

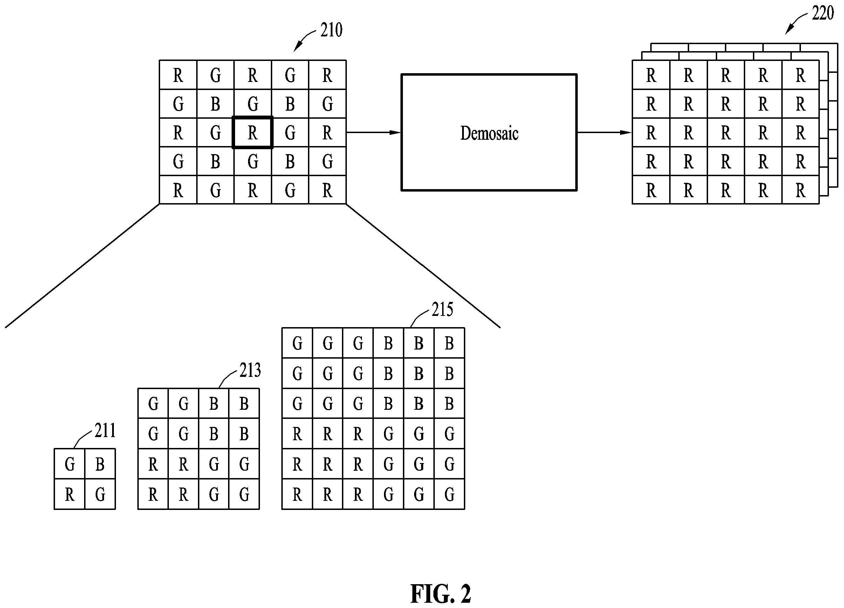

FIG. 2 illustrates an example of performing a demosaicing method.

Referring to FIG. 2, a pixel in an image sensor may sense a degree of black-and-white brightness (or "gray scale"). A color value of a pixel may be generated when a filter is combined with the pixel. For example, using a CFA in the image sensor may apply a color to a pixel.

A resulting image obtained by applying the CFA to the image sensor may be defined herein as a CFA pattern. An input signal (e.g., an input signal 210) sampled by the CFA may be referred to herein as a CFA input image, a CFA pattern, a CFA raw image, or the like.

The CFA may be arranged in various patterns. A pattern arranged as shown in drawing 211 may be referred to as a Bayer pattern, a pattern arranged as shown in drawing 213 may be referred to as a tetra pattern, and a pattern arranged as shown in drawing 215 may be referred to as a nona pattern. The tetra pattern is also known as a Quad Bayer pattern. Although the CFA is described herein as having the Bayer pattern for the convenience of description, it is not necessarily limited thereto. According to the design, various patterns such as the tetra pattern and the nona pattern may also be used for the CFA.

One pixel may be combined with only one of R, G, and B filters, and thus one image pixel of the image sensor 115 may sense only one color. To compensate for this, a color that is missing in each pixel may be artificially generated using neighboring pixels. For an actual image people view, all the R, G, and B colors may be viewed together, and this may also be a result artificially generated through neighboring pixels, and such a process may be referred to as demosaicing (or "demosaic"). For example, demosaicing may be an operation of generating an RGB image 220 using the input signal 210 sampled by the CFA.

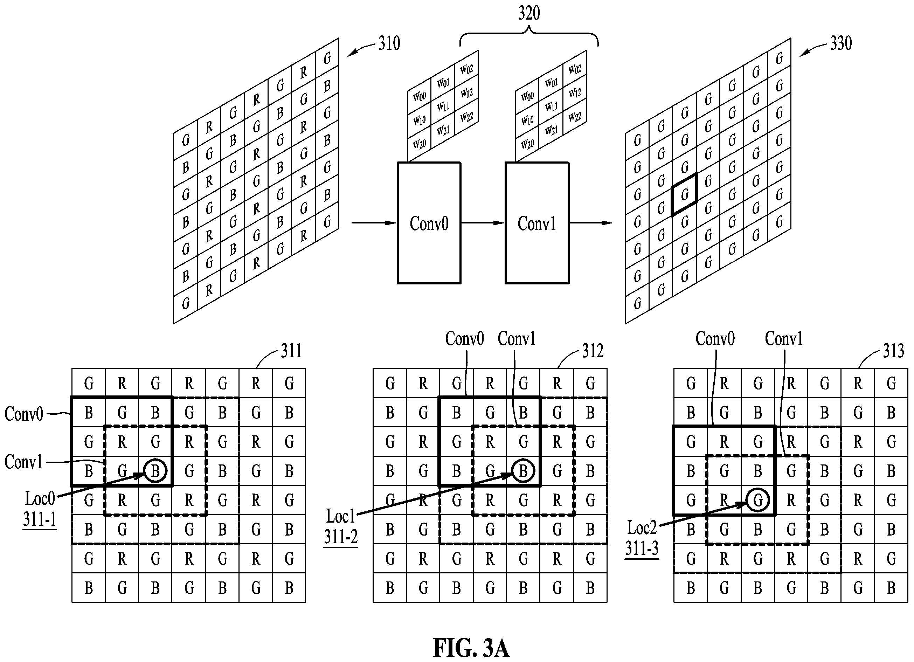

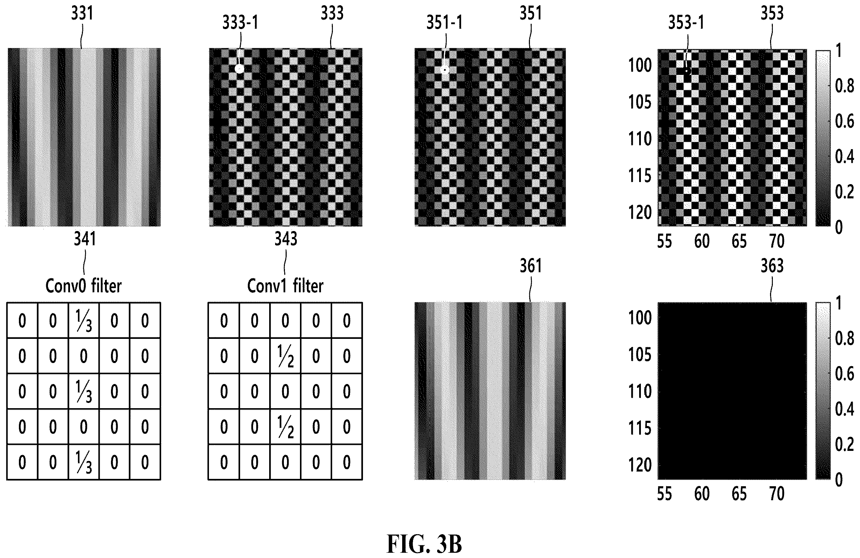

FIGS. 3A and 3B illustrate a comparison between a demosaicing method according to one or more example embodiments and a typical demosaicing method.

Referring to FIG. 3A, a G image 330 (i.e., a demosaicing image obtained by demosaicing all pixels to the green color) may be generated by demosaicing a Bayer raw 310 sampled by a CFA, using a 2-layer convolution filter 320.

Drawings 311, 312, and 313 show situations in which a convolution filter is applied to a pixel location Loc0 311-1, a pixel location Loc1 311-2, and a pixel location Loc2 311-3, respectively. A convolution operation may be performed between the Bayer raw 310 and a ConvO filter of the convolution filter 320, and a convolution operation may be performed between a result thereof (e.g., a result of the convolution operation performed between the Bayer raw 310 and the ConvO filter) and a Conv1 filter of the convolution filter 320. The expression "applying a convolution filter" used herein may indicate performing a convolution operation based on the convolution filter.

In the case of Loc0 311-1 and Loc1 311-2, a weight of a convolution filter may be applied to the same color pixels, while, in the case of Loc2 311-3, a weight of the 2-layer convolution filter 320 may be applied to a color pixel different from those of Loc0 311-1 and Loc1 311-2. For example, in the case of Loc0 311-1 and Loc1 311-2, w₂₂ of the ConvO layer may all be applied to blue pixels, and then w₁₁ of the Conv1 layer may be applied to a result that has passed through the ConvO layer. On the other hand, in the case of Loc2 311-3, w₂₂ of the ConvO layer may be applied to green pixels, and then w₁₁ of the Conv1 layer may be applied to a result that has passed through the ConvO layer. For example, depending on a color channel of an output location, a color of a pixel to which a weight of each convolution filter is applied may vary.

As described above, when a typical method and device applies a convolution filter to the entire output without considering a CFA pattern may result in a difference in data distribution between color pixels, the typical method and device may not learn an optical filter weight and may cause an unintended result when the same filter is applied to each pixel location.

Therefore, the data distribution may vary depending on a color pixel, and a method and device of one or more embodiments may perform learning on the same color pixel for an optimal filter weight.

Referring to FIG. 3B, 331 is a synthetically generated green color resolution chart and is a target image to be restored, and 333 is a Bayer pattern corresponding to the target image 331. For example, the target image 331 may be an image input to a CFA including only a green color, and the Bayer pattern 333 may be a pattern generated as the target image 331 has passed through the CFA. When the target image 331 includes only the green color, red pixel and blue pixel areas of the Bayer pattern 333 may have no value, and only a green pixel area may have a value. For example, in the target image 331, portions displayed in black may indicate the red pixel and blue pixel areas that do not have any value.

In an example, a typical method may generate a G image (i.e., a demosaicing image obtained by demosaicing all pixels to the green color) among RGB images by using a first filter 341 and a second filter 343 for the target image 331, while a method of one or more example embodiments may generate an output image 361 of the green color among the RGB images by performing demosaicing on the target image 331.

When, as in the typical method, the first filter 341 and the second filter 343 are applied without considering a CFA pattern, a greater error may occur at a location of a green pixel compared to locations of red and blue pixels. For example, as shown in a green image 351 generated by performing demosaicing by applying the first filter 341 and the second filter 343 to the target image 331, a pixel location 333-1 on the Bayer pattern 333 (and a same pixel location on the target image 331) may have the green color, but a pixel location 351-1 of the green image 351, which is the same location as the pixel location 333-1, may have a value of zero "0." For example, in the green image 351, pixel areas corresponding to the red pixel and blue pixel areas displayed in black in the target image 331 may have a value that is not zero (0) through the application of the first filter 341 and the second filter 343 (which should be zero in the reconstructed image 351), while a pixel area corresponding the green area (e.g., the pixel location 333-1) on the target image 331 may have a value that is 0 (which should have a non-nil value in the reconstructed image 351) by the application of the first filter 341 and the second filter 343.

In the typical method, an error image 353 may be an image generated based on a difference between the target image 331 and the green image 351, being closer to black may indicate a smaller error, and being closer to white may indicate a greater error. As shown in the error image 353, a greater error may occur at a location (e.g., a location 353-1) of a green pixel, compared to locations of the red and blue pixels.

According to one or more example embodiments described in further detail below, in contrast to the typical method, a method and device of one or more embodiments may apply a convolution filter to locations of red and blue pixels using location information of a CFA pattern, and may use an input image as it is for a location of a green pixel. As shown in the output image 361 obtained by performing demosaicing through the method and device of one or more embodiments and an error image 363, the method and device of one or more embodiments may restore a target image without a significant error. When filtering is used for demosaicing, even the pixel values already known (e.g. the green pixels in the target image 331) may change, which leads to inaccuracy. In some embodiments of the present disclosure, the pixel values originally from the CFA (in the example here, the green pixels) are retained, and only the pixel values (or at least part of the pixel values) missing from the pixel values from the CFA (in the example here, at least part of the red pixels and/or at least part of the blue pixels) are estimated using filtering. Since the pixel values originally present from the CFA are accurate, not estimating them again can improve the accuracy of the output image.

As described above, a distribution of neighboring pixels may vary depending on locations of color pixels in a CFA, and thus when using a learning-based artificial neural network (ANN) model, the method and device of one or more embodiments may consider a CFA pattern for effective restoration of an output image.

In the case of a tetra pattern (e.g., 4x4) or a nona pattern (e.g., 9x9) in addition to a Bayer pattern (e.g., 2x2), in particular, a sampling interval between color channels may be widened by a CFA pattern, and a data distribution of neighboring pixels by the CFA pattern may be more diversified, and thus it may be more advantageous for the method and device of one or more embodiments to consider the CFA pattern for demosaicing.

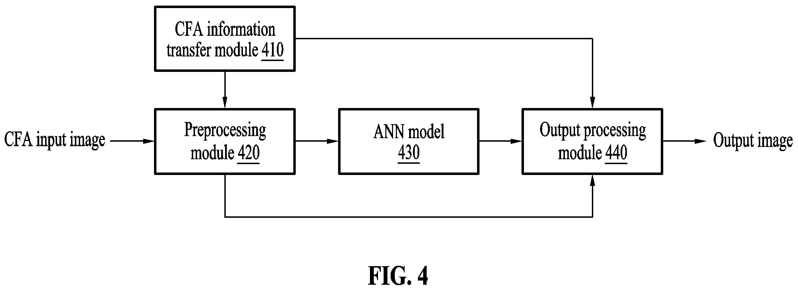

FIGS. 4 to 6 illustrate a demosaicing method according to one or more example embodiments.

Referring to FIG. 4, what is described above with reference to FIGS. 1 and 2 may be applied to what is to be described below with reference to FIG. 4. The processor 120 of the imaging system 100 described above with reference to FIG. 1 may include a CFA information transfer module 410, a preprocessing module 420, an ANN model 430, and an output processing module 440. The term "module" used in the CFA information transfer module 410, the preprocessing module 420, and the output processing module 440 may refer to hardware (e.g., hardware implementing software and/or firmware), and may interchangeably be used with other terms, for example, "logic," "logic block," "part," or "circuitry." A module may be a single integral component, or a minimum unit or part thereof, configured to perform one or more functions. A module may be implemented mechanically or electronically. A module may include at least one of, for example, an application-specific integrated circuit (ASIC) chip, a field-programmable gate array (FPGA), and/or a programmable-logic device configured to perform certain operations.

The CFA information transfer module 410 may transmit pattern information corresponding to a CFA to the preprocessing module 420 and the output processing module 440. The pattern information, which is CFA information according to pixel locations, may include, for example, RGB color channel information, and/or gain values, and/or disparity information according to color pixels, and/or the like.

A CFA input image may be input to the preprocessing module 420, and the preprocessing module 420 may receive the pattern information from the CFA information transfer module 410. The preprocessing module 420 may preprocess the CFA input image based on the pattern information.

Referring again to FIG. 4, according to another example embodiment, the preprocessing module 420 may transmit the CFA input image without change to the output processing module 440.

According to another example embodiment, the preprocessing module 420 may extract a feature corresponding to the input image for each color type of the CFA through preprocessing based on a CFA pattern. In this way, the filter for each color type can be optimized by a neural network. Additionally, to reduce a computational amount, the preprocessing module 420 may perform downsampling after a convolution layer for each pixel type of the color filter.

The ANN model 430 may be a model that is trained to perform demosaicing and is not limited to a specific structure and type of network.

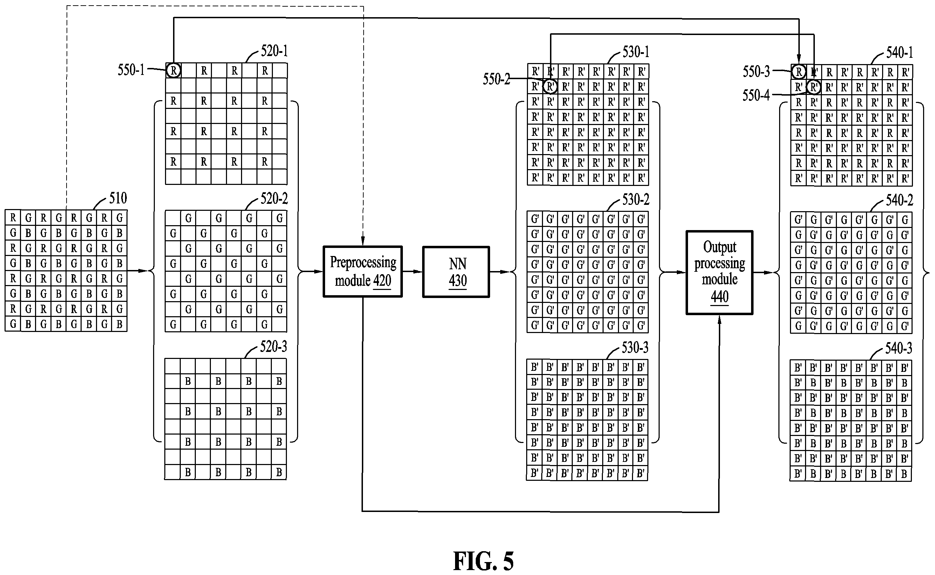

Referring to FIG. 5, a CFA input image 510 may be classified by color type of a CFA into a red color input image 520-1, a green color input image 520-2, and a blue color input image 520-3. The preprocessing module 420 may transmit the CFA input image 510 to the ANN model 430 and the output processing module 440 and/or transmit the CFA input images 520-1, 520-2, and 520-3 classified by color type to the ANN model 430 and the output processing module 440.

The ANN model 430 may receive the CFA input images 520-1, 520-2, and 520-3 classified by color type and generate inferred images 530-1, 530-2, and 530-3. The ANN model 430 may be trained to perform demosaicing.

In the case of a typical method, a network may be configured without consideration of a CFA, and the typical method may have difficulty in responding to a change in a distribution of neighboring color pixels depending on a target location. Accordingly, the network of the typical method may not be optimally trained in a learning process through backpropagation.

In contrast, according to one or more example embodiments, the ANN model 430 may generate an output in consideration of a CFA. Thus while the same filter weights are applied to all the pixels of the same color (e.g. the same filter weights are applied to all R pixels, and/or the same filter weights are applied to all G pixels), different filter weights are applied to the pixels of different colors (e.g. R, G, B pixels), and thus the method and device of one or more embodiments may facilitate learning and high performance. For example, the ANN model 430 may have the same color pixel distribution when a filter weight applied to the red color is applied to the red CFA input image 520-1. This contrasts the prior art which does not consider the CFA pattern and apply a single filter to pixels of different colors.

According to one or more example embodiments, the inferred images 530-1, 530-2, and 530-3 may be RGB images generated through inference of the trained ANN model 430. To distinguish from the red color R, the green color G, and the blue color B in the CFA input image 510 and the CFA input images 520-1, 520-2, and 520-3, the red color, the green color, and the blue color in the inferred images 530-1, 530-2, and 530-3 may be indicated as R', G', and B', respectively. The inferred image comprises pixels inferred by the ANN model which correspond to the pixels of the preprocessed input image.

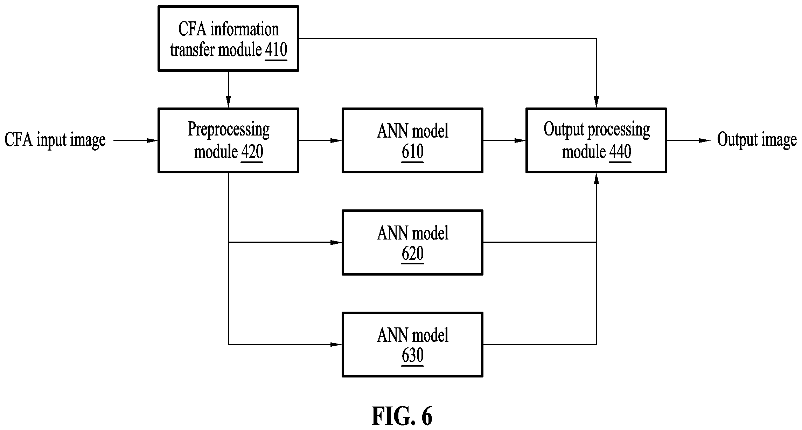

Referring to FIG. 6, according to one or more example embodiments, the processor 120 may use a plurality of ANN models. The processor 120 may generate an inferred image using a separate ANN model for each color. For example, an R ANN model 610 may receive a red CFA input image 520-1 to generate a red inferred image, a G ANN model 620 may receive a green CFA input image 520-2 to generate a green inferred image, and a B ANN model 630 may receive a blue CFA input image 520-3 to generate a blue inference image.

Referring again to FIG. 4, according to one or more example embodiments, the output processing module 440 may generate an output image by selecting a pixel value, for each pixel, from between a preprocessed input image and an inferred image, based on pattern information. The skilled person understands that the preprocessed input image, the inferred image, and the output image has the same dimension. For each pixel in the output image there is a corresponding pixel in the preprocessed input image and the inferred image, typically at the same location. Selecting a pixel value for a pixel in the output image may mean from a corresponding pixel in one of the preprocessed input image and the inferred image. The output processing module 440 may generate an output in consideration of a CFA pattern and location information of output pixels. The output processing module 440 may use the CFA pattern information and the pixel location information to generate the output image based on the input image and/or preprocessed data received from the preprocessing module 420 and the inferred image of the ANN model 430.

For example, the output processing module 440 may determine a pixel value for a pixel having the same color as that of a target pixel based on the preprocessed input image and may determine a pixel value for a pixel (or referred to herein as a "missing pixel") having a different color from that of the target pixel based on the inferred image.

Referring to FIG. 5, the output processing module 440 may generate output images 540-1, 540-2, and 540-3 based on the CFA input images 520-1, 520-2, and 520-3 and the inferred images 530-1, 530-2, and 530-3. For example, when the target pixel is red, the output processing module 440 may determine a pixel value of a first pixel 550-3 having a red color which is the same color as that of the target pixel to be a pixel value R of an input image 550-1 corresponding to the first pixel 550-3. In contrast, the output processing module 440 may determine a pixel value of a second pixel 550-4 having a different color (e.g., blue color) from that of the target pixel to be a pixel value R' based on an inferred image 530-1.

As described above, according to one or more example embodiments, the ANN model 430 may generate an output in consideration of a CFA, facilitating effective learning of a filter weight of an ANN.

To verify this, experiments were conducted, and in each of the experiments, a residual dense network (RDN) was used as an ANN model. To verify feasibility, a demosaicing result was checked from green pixels.

Table 1 shows the peak signal-to-noise ratio (PSNR) performance according to a network size obtained from a typical demosaicing method and a demosaicing method of one or more example embodiments.

**Table 1:**

| | | | | |
|---|---|---|---|---|
| FLOPs | | 2.203G | 1.092G | 732.955M |
| #Params | | 135.585K | 67.169K | 45.137K |
| PSNR | Typical method | 41.368 | 40.359 | 39.5551 |
| | Present disclosure | 41.5112 | 40.691 | 40.0933 |

A Bayer structure was used as a structure of a CFA, and according to one or more example embodiments of the present disclosure, an imaging system was configured such that a preprocessing module transmits an input image to an output processing module, an ANN model is configured as a single model, and the output processing module provides an output of the ANN model for a missing pixel.

Referring to Table 1 above, it is verified that, as the network size decreases, a PSNR value obtained from the demosaicing method of one or more example embodiments of the present disclosure increases by +0.143, +0.332, and +0.538 compared to the typical demosaicing method.

**Table 2:**

| | Complexity | | | PSNR | |
|---|---|---|---|---|---|
| | FLOPs | #Params | Bayer | Tetra | Nona |
| Typical method | 1.501G | 91.617K | 40.8051 | 38.1964 | 36.7893 |
| Present disclosure | 1.501G | 91.617K | 40.9831 | 39.0116 | 38.2393 |

In addition, Table 2 shows the results of evaluating the PSNR performance according to a type of CFA. It is verified that a PSNR value obtained from the demosaicing method of one or more example embodiments of the present disclosure increases by +0.178, +0.815, and +1.45 in terms of Bayer, tetra, and nona color filters, respectively, compared to the typical demosaicing method. In a case in which the CFA is tetra or nona, it is verified that a sampling interval between the same colors is longer than that of Bayer and a color distribution of neighboring pixels is greatly changed. It is thus verified that the effects of the present disclosure are further maximized.

In addition, as described above, Table 3 shows the results of performing filtering and downsampling in consideration of a CFA pattern by a preprocessing module to reduce a computational amount.

**Table 3:**

| | Complexity | | PSNR |
|---|---|---|---|
| | FLOPs | #Params | Tetra |
| Typical method | 1.501G | 91.617K | 38.1964 |
| Present disclosure | 1.501G | 91.617K | 39.0116 |
| Present disclosure + preprocessing | 393.224M | 136.994K | 38.7895 |

Comparing the results obtained using the typical demosaicing method and one or more example embodiments of a preprocessing module for reducing a computational amount, it is verified that the demosaicing method of the one or more example embodiments has the effect of reducing the computational amount by 73% while maintaining an advantage of a PSNR of 0.6dB compared to the typical demosaicing method. The demosaicing method of the one or more example embodiments may be highly applicable in real-time processing situations where latency reduction is important.

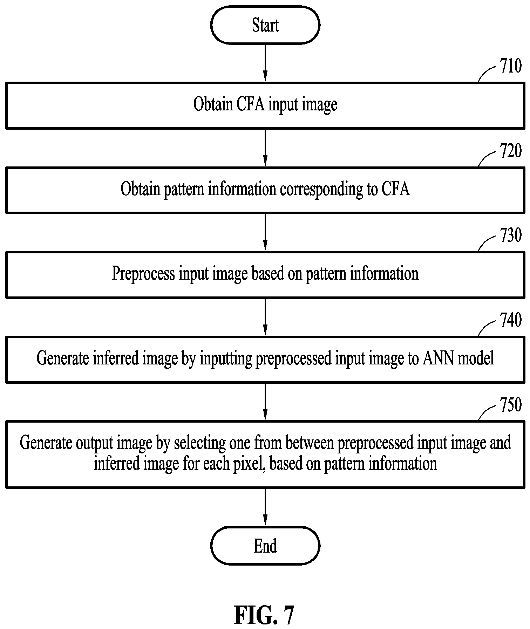

FIG. 7 illustrates a demosaicing method according to one or more example embodiments.

Referring to FIG. 7, operations 710 to 750 are described as being performed using the imaging system 100 shown in FIG. 1 for the convenience of description. However, operations 710 to750 may be performed by any other suitable electronic devices and used in any suitable system.

Furthermore, the following operations may be performed in the order and manner as shown and described below with reference to FIG. 7, but the order of one or more of the operations may be changed one or more of the operations may be omitted, and/or two or more of the operations may be performed in parallel or simultaneously.

In operation 710, the imaging system 100 of one or more example embodiments may obtain a CFA input image. The CFA input image may include at least one of a Bayer pattern image, a tetra pattern image, or a nona pattern image.

For example, the image sensor 115 may generate the CFA input image by sensing a light that has passed through the CFA 110 and may transmit the generated CFA input image to the processor 120.

In operation 720, the imaging system 100 may obtain pattern information corresponding to the CFA. The pattern information may include at least one of pixel location information of the CFA and color information according to pixel locations. The color information may include at least one of color channel information, gain information, or disparity information according to pixel locations.

In operation 730, the imaging system 100 may preprocess the input image based on the pattern information. The imaging system 100 may classify the input image by color type of the CFA based on the pattern information. The imaging system 100 may further extract a feature corresponding to the input image for each color type of the CFA, based on the pattern information. The imaging system 100 may downsample the feature.

In operation 740, the imaging system 100 may generate an inferred image by inputting the preprocessed input image to an ANN model. The imaging system 100 may input the preprocessed input image to the ANN model to generate an RGB image corresponding to the input image.

In operation 750, the imaging system 100 may generate an output image by selecting a pixel value, for each pixel, from between the preprocessed input image and the inferred image, based on the pattern information. The imaging system 100 may determine a pixel value for a pixel having the same color as that of a target pixel based on the preprocessed input image and may determine a pixel value for a pixel having a different color from that of the target pixel based on the inferred image.

The imaging system 100 may perform postprocessing on the output image based on the pattern information. The imaging system 100 may perform at least one of denoising or super-resolution on the output image based on the pattern information.

The ANN model may be present for each color type of the CFA, and the imaging system 100 may input the preprocessed input image to an ANN model corresponding to each color type of the CFA to generate the inferred image.

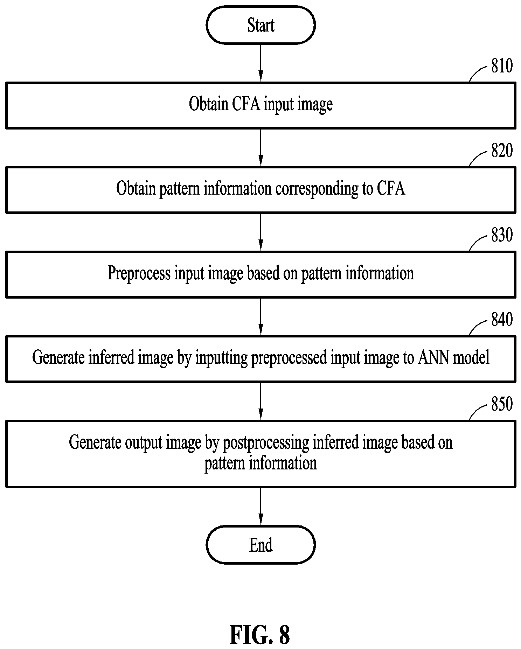

FIG. 8 illustrates a signal processing method according to one or more example embodiments.

Referring to FIG. 8, operations 810 to 850 are described as being performed using the imaging system 100 shown in FIG. 1 for the convenience of description. However, operations 810 to 850 may also be performed by any other suitable electronic devices and used in any suitable system.

Furthermore, the following operations may be performed in the order and manner as shown and described below with reference to FIG. 8, but the order of one or more of the operations may be changed one or more of the operations may be omitted, and/or two or more of the operations may be performed in parallel or simultaneously.

The signal processing method of one or more example embodiments may be used for any modules and tasks that may be processed in a raw domain sampled by a CFA, in addition to the demosaicing method described above with reference to FIGS. 1 to 7. For example, the signal processing method may be used in denoising, remosaicing (or "remosaic"), super-resolution, bad pixel correction, and the like. Performing super-resolution provides an advantage by enhancing image detail, especially in low-resolution inputs or those with missing information due to CFA sampling. Additionally, it leverages CFA-specific pattern information to achieve higher reconstruction accuracy and/or supports applications requiring fine detail, such as medical imaging or surveillance.

In operation 810, the imaging system 100 of one or more example embodiments may obtain a CFA input image.

In operation 820, the imaging system 100 may obtain pattern information corresponding to a CFA. The pattern information may include at least one of pixel location information of the CFA or color information according to pixel locations. The color information may include at least one of color channel information, gain information, or disparity information according to pixel locations.

In operation 830, the imaging system 100 may preprocess the input image based on the pattern information.

In operation 840, the imaging system 100 may generate an inferred image by inputting the preprocessed input image to an ANN model. The ANN model may be trained to perform tasks, for example, remosaicing, super-resolution, missing pixel correction, and the like. When the ANN model is trained to perform remosaicing, the ANN model may receive a bunch of pixels and convert it back into a raw Bayer pattern.

In operation 850, the imaging system 100 may generate an output image by postprocessing the inferred image based on the pattern information. For example, when the imaging system 100 performs remosaicing, the imaging system 100 may determine a pixel value for a pixel having the same color as that of a target pixel based on the pixel bundle and determine a pixel value for a pixel having a different color from that of the target pixel based on the inferred image. The pixel bundle refers to multiple channels (e.g., RGB channels) that serve as the input for remosaicing. Remosaicing involves generating a CFA image from RGB channels by using respectively the values in the channel of a color (e.g. the R channel) for the pixel locations of this color (e.g. for the R pixel locations) in the CFA while estimating the values of this color other than the pixel locations of this color in the CFA using the CNN.

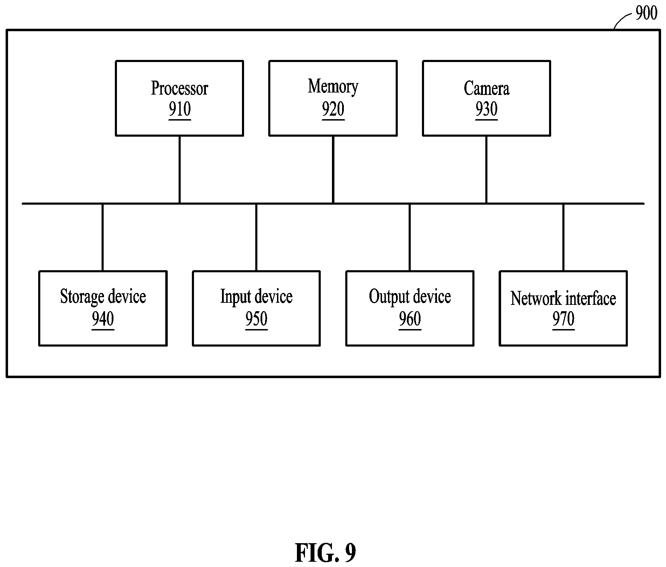

FIG. 9 illustrates an example of a configuration of an electronic device according to one or more example embodiments.

Referring to FIG. 9, an electronic device 900 may include a processor 910 (e.g., one or more processors), a memory 920 (e.g., one or more memories), a camera 930, a storage device 940, an input device 950, an output device 960, and a network interface 970, and these components may communicate with one another through a communication bus 980. For example, the electronic device 900 may be, or implemented as at least a part of, a mobile device such as a mobile phone, a smart phone, a personal digital assistant (PDA), a netbook, a tablet computer or a laptop computer, a wearable device such as a smart watch, a smart band or smart glasses, or a computing device such as a desktop or a server. The electronic device 900 may include, structurally and/or functionally, the imaging system 100 of FIG. 1.

The processor 910 may execute instructions and functions in the electronic device 900. For example, the processor 910 may process the instructions stored in the memory 920 or the storage device 940. The processor 910 may perform one or more of the operations or methods described above with reference to FIGS. 1 to 8. The memory 920 may include a non-transitory computer-readable storage medium or a non-transitory computer-readable storage device. The memory 920 may store instructions that are to be executed by the processor 910, and may also store information associated with software and/or applications when the software and/or applications are being executed by the electronic device 900. In an example, the memory 920 may be or include a non-transitory computer-readable storage medium storing instructions that, when executed by the processor 910, configure the processor 910 to perform any one, any combination, or all of operations and methods described herein with reference to FIGS. 1-8. In an example, the processor 910 may be or include the processor 120 of FIG. 1. In another example, the processor 120 may be an ISP and the camera 930 may include the processor 120.

The camera 930 may capture a photo and/or a video. The camera 930 may include the lens 105, the CFA 110, and the image sensor 115 of FIG. 1. The storage device 940 may include a non-transitory computer-readable storage medium or a non-transitory computer-readable storage device. The storage device 940 may store a greater amount of information than the memory 920 and store the information for a long period of time. For example, the storage device 940 may include a magnetic hard disk, an optical disk, a flash memory, a floppy disk, or other non-volatile memories.

The input device 950 may receive an input from a user through a traditional input scheme using a keyboard and a mouse, and through a new input scheme such as a touch input, a voice input and an image input. The input device 950 may include, for example, a keyboard, a mouse, a touchscreen, a microphone, and other devices that may detect an input from a user and transmit the detected input to the electronic device 900. The output device 960 may provide an output of the electronic device 900 to a user through a visual, auditory, or tactile channel. The output device 960 may include, for example, a display, a touch screen, a speaker, a vibration generator, or any other device that provides an output to a user. For example, the output device 960 may provide an output image generated by the processor 910 through the display. The network interface 970 may communicate with an external device through a wired or wireless network.

The imaging systems, lenses, CFAs, image sensors, processors, CFA information transfer modules, preprocessing modules, output processing modules, electronic devices, memories, cameras, storage devices, input devices, output devices, network interfaces, imaging system 100, lens 105, CFA 110, image sensor 115, processor 120, CFA information transfer module 410, preprocessing module 420, output processing module 440, electronic device 900, processor 910, memory 920, camera 930, storage device 940, input device 950, output device 960, network interface 970, and these components may communicate with one another through a communication bus 980described herein, including descriptions with respect to respect to FIGS. 1-9, are implemented by or representative of hardware components. As described above, or in addition to the descriptions above, examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. As described above, or in addition to the descriptions above, example hardware components may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in, and discussed with respect to, FIGS. 1-9 that perform the operations described in this application are performed by computing hardware, for example, by one or more processors or computers, implemented as described above implementing instructions (e.g., computer or processor/processing device readable instructions) or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media, and thus, not a signal per se. As described above, or in addition to the descriptions above, examples of a non-transitory computer-readable storage medium include one or more of any of read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks , and/or any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims . The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above and all drawing disclosures, the scope of the disclosure is also inclusive of the claims and their equivalents, i.e., all variations within the scope of the claims and their equivalents are to be construed as being included in the disclosure.

## Claims

1. A processor-implemented method, comprising:
obtaining a color filter array, CFA, input image, the CFA input image being an input signal sampled by a CFA;
obtaining pattern information corresponding to the CFA;
preprocessing the input image based on the pattern information;
generating an inferred image by inputting the preprocessed input image to an artificial neural network, ANN, model, the inferred image comprising pixels inferred by the ANN model which correspond to the pixels of the preprocessed input image; and
generating an output image by selecting a pixel value, for each pixel, from one of the preprocessed input image and the inferred image, based on the pattern information.

2. The method of claim 1, wherein the generating of the output image comprises:
determining the pixel value for a pixel having the same color as that of a target pixel based on the preprocessed input image, the target pixel being a pixel that is a target of demosaicing; and
determining the pixel value for a pixel having a different color from that of the target pixel based on the inferred image.

3. The method of claim 1 or 2, wherein the preprocessing comprises classifying the input image by color type of the CFA based on the pattern information.

4. The method of claim 1 or 2, wherein the preprocessing comprises extracting a feature corresponding to the input image for each color type of the CFA based on the pattern information.

5. The method of claim 4, wherein the preprocessing further comprises downsampling the feature.

6. The method of any of the previous claims, wherein
the ANN model is present for each color type of the CFA, and
the generating of the inferred image comprises generating the inferred image by inputting the preprocessed input image to an ANN model corresponding to each color type of the CFA.

7. The method of any of the previous claims, wherein the pattern information comprises pixel location information of the CFA associated with pixel locations and/or color information based on the pixel locations.

8. The method of claim 7, wherein the color information comprises any one or any combination of any two or more of color channel information, gain information, and disparity information according to the pixel locations.

9. The method of any of the previous claims, further comprising postprocessing the output image based on the pattern information, wherein preferably the postprocessing comprises performing either one or both of denoising or super-resolution on the output image, based on the pattern information.

10. The method of any of the previous claims, wherein the CFA input image comprises any one or any combination of any two or more of a Bayer pattern image, a tetra pattern image, and a nona pattern image; and/or
wherein the generating of the inferred image comprises generating a red, green, and blue, RGB, image corresponding to the preprocessed input image.

11. A non-transitory computer-readable storage medium storing instructions that, when executed by one or more processors, configure the one or more processors to perform the method of any of the previous claims.

12. An electronic device, comprising:
an image sensor combined with a color filter array, CFA, wherein the image sensor is configured to generate a CFA input image by sensing a light that has passed through a CFA, the CFA input image being an input signal sampled by the CFA; and
one or more processors configured to:
obtain pattern information corresponding to the CFA;
preprocess the input image based on the pattern information;
generate an inferred image by inputting the preprocessed input image to an artificial neural network, ANN, model, the inferred image comprising pixels inferred by the ANN model which correspond to the pixels of the preprocessed input image; and
generate an output image by selecting a pixel value, for each pixel, from one of the preprocessed input image and the inferred image, based on the pattern information.

13. The electronic device of claim 12, wherein, for the generating of the output image, the one or more processors are configured to:
determine the pixel value for a pixel having the same color as that of a target pixel based on the preprocessed input image, the target pixel being a pixel that is a target of demosaicing; and
determine the pixel value for a pixel having a different color from that of the target pixel based on the inferred image.

14. The electronic device of claim 12 or 13, wherein, for the preprocessing, the one or more processors are configured to classify the input image by color type of the CFA based on the pattern information; or
wherein, for the preprocessing, the one or more processors are configured to extract a feature corresponding to the input image for each color type of the CFA, based on the pattern information, wherein, preferably, for the preprocessing, the one or more processors are configured to downsample the feature.

15. The electronic device of any of claim 12 - 14, wherein
the ANN model is present for each color type of the CFA, and
for the generating of the inferred image, the one or more processors are configured to generate the inferred image by inputting the preprocessed input image to an ANN model corresponding to each color type of the CFA; and/or
wherein the pattern information comprises pixel location information of the CFA associated with pixel locations and/or color information based on the pixel locations, wherein preferably the color information comprises any one or any combination of any two or more of color channel information, gain information, and disparity information, according to the pixel locations.
